# EUROPEAN PATENT APPLICATION

(11) **EP 3 666 821 A1**
(43) Date of publication of application: **17.06.2020**
(21) Application number: 18843126.6
(22) Date of filing: 10.07.2018
(51) Int. Cl.: C08L 21/00, B60C 1/00, C08J 3/12, C08J 3/20, C08K 7/00, C08L 101/00

(54) **RUBBER COMPOSITION, PRODUCTION METHOD THEREFOR, AND TIRE**

(30) Priority: 10.08.2017 JP 2017155586
(71) Applicant: Bridgestone Corporation, Tokyo 104-8340 (JP)
(72) Inventor: IZUMOTO Akiko, Tokyo 104-8340 (JP)
(74) Representative: Oxley, Robin John George
(86) International application number: PCT/JP2018/026089
(87) International publication number: WO 2019/031144

(57) **Abstract**

Provided is a rubber composition that can improve the on-ice performance of a rubber article such as a tire while maintaining the wear resistance of the rubber article at a good level. The rubber composition contains a rubber component and fibrous or flat particles, where the particles form a plurality of aggregates in the rubber composition, and a proportion of aggregate having an aggregation diameter of 10 µm or more and 1000 µm or less is 70 % or more among the plurality of aggregates.

## Description

### TECHNICAL FIELD

This disclosure relates to a rubber composition, a method of producing the same, and a tire.

### BACKGROUND

Various studies have been conducted to improve the braking performance and the driving performance of tires on an icy and snowy road ever since studded tires were regulated. For example, JP 2014-227487 A (PTL 1) proposes that a modified natural rubber, in which non-rubber components are removed to achieve a high purity and the pH of rubber components is adjusted to a predetermined range by treatment with an acidic compound or the like, and a filler such as carbon black be used to enhance the reinforcing property and improve the on-ice performance and other properties required for studless tires.

### CITATION LIST

### Patent Literature

PTL 1: JP 2014-227487 A

### SUMMARY

### (Technical Problem)

However, the above-mentioned conventional technique aims at controlling the pH of rubber components to suppress a decrease in molecular weight during storage, and therefore it cannot radically improve the on-ice performance of a tire. Under such circumstances, it has been desired to develop more techniques that can improve the on-ice performance of a rubber article such as a tire.

On the other hand, the on-ice performance of a rubber article such as a tire generally tends to trade off with the wear resistance. Therefore, it is important not to deteriorate the wear resistance while improving the on-ice performance.

It could thus be helpful to provide a rubber composition that can improve the on-ice performance of a rubber article such as a tire while maintaining the wear resistance of the rubber article at a good level. In addition, it could be helpful to provide a method of producing a rubber composition capable of efficiently producing a rubber composition that can improve the on-ice performance of a rubber article such as a tire while maintaining the wear resistance of the rubber article at a good level. Further, it could be helpful to provide a tire with improved on-ice performance and good wear resistance.

### (Solution to Problem)

That is, the rubber composition of the present disclosure is a rubber composition comprising a rubber component and fibrous or flat particles, wherein
the particles form a plurality of aggregates in the rubber composition, and
a proportion of aggregate having an aggregation diameter of 10 µm or more and 1000 µm or less is 70 % or more among the plurality of aggregates.

In addition, the method of producing a rubber composition of the present disclosure is a method of producing the rubber composition described above, which comprises
a process of mixing fibrous or flat particles and a thermoplastic component at a temperature that is equal to or higher than a melting point of the thermoplastic component and equal to or lower than a melting point of the particles to obtain a particle-containing mixture;
a process of solidifying and pulverizing the particle-containing mixture to obtain a plurality of preliminary aggregates formed of the particles and the thermoplastic component; and
a process of mixing the plurality of preliminary aggregates and a rubber component and heating the plurality of preliminary aggregates and the rubber component at a temperature that is equal to or higher than the melting point of the thermoplastic component and equal to or lower than the melting point of the particles to form a plurality of aggregates formed of the particles.

Further, the tire of the present disclosure comprises the above-described rubber composition in a tread portion.

### (Advantageous Effect)

According to the present disclosure, it is possible to provide a rubber composition that can improve the on-ice performance of a rubber article such as a tire while maintaining the wear resistance of the rubber article at a good level. In addition, according to the present disclosure, it is possible to provide a method of producing a rubber composition capable of efficiently producing a rubber composition that can improve the on-ice performance of a rubber article such as a tire while maintaining the wear resistance of the rubber article at a good level. Further, according to the present disclosure, it is possible to provide a tire with improved on-ice performance and good wear resistance.

### BRIEF DESCRIPTION OF THE DRAWINGS

In the accompanying drawings:
FIG. 1 schematically illustrates the fibrous or flat particles;
FIG. 2 schematically illustrates a binarized microscopic image of the surface of the rubber composition of an embodiment of the present disclosure; and
FIG. 3 schematically illustrates a binarized microscopic image of the surface of the rubber composition of a comparative example.

### DETAILED DESCRIPTION

The following describes the present disclosure in detail based on embodiments.

### (Rubber Composition)

The rubber composition of an embodiment of the present disclosure (hereinafter may be referred to as "rubber composition of the present embodiment") contains a rubber component and particles. The particles are in a fibrous or flat shape and form a plurality of aggregates in the rubber composition. Further, in the rubber composition of the present embodiment, the proportion of aggregate having an aggregation diameter of 10 µm or more and 1000 µm or less is 70 % or more among the plurality of aggregates.

For example, when a vehicle travels on an icy and snowy road, a water film is usually formed because of, for example, the frictional heat between the icy and snowy road and a tire. It is considered that the water film lowers the coefficient of friction between the tire and the icy and snowy road and deteriorates the on-ice performance. In this regard, the rubber composition of the present embodiment contains particles having a predetermined shape. As a result, when the rubber composition is used in a rubber member such as a tread portion of a tire, for example, the surface roughness of the rubber member substantially improves, and the particles increase the viscosity of the water film to suppress a decrease in coefficient of friction (coefficient of static friction and coefficient of dynamic friction). In addition, because the particles forming the aggregates, which are island phases, are present on the surface of the rubber member such as a tread portion, the area for one island phase that can be in contact with the water film is large, and this further increases the surface roughness of the rubber member. Further, because the aggregates have a certain number of gaps, the presence of aggregates on the surface of the rubber member such as a tread portion improves the water absorption function, making it possible to remove the water film more effectively. It is considered that the rubber composition of the present embodiment can effectively improve the on-ice performance of a rubber article with a combination of these effects.

In the rubber composition of the present embodiment, the proportion of aggregate having an aggregation diameter of 10 µm or more and 1000 µm or less is 70 % or more. That is, in the rubber composition of the present embodiment, the size of the aggregates is optimized so that the on-ice performance of a rubber article can be improved more effectively. It is considered that an aggregate having an aggregation diameter of 10 µm or more and 1000 µm or less has a larger surface area and is more effective in improving the on-ice performance than, for example, a single particle (i.e., non-aggregate particle) having the equivalent diameter.

In the present specification, the "aggregation" of the fibrous or flat particles means that one particle is entangled with itself or two or more particles are entangled with each other to form one aggregate, and the "aggregate" refers to an aggregate having a structure in which one particle is entangled with itself or a structure in which two or more particles are entangled with each other.

The rubber composition of the present embodiment may contain a non-particulate thermoplastic component in addition to the rubber component and the particles. Further, it may contain any other components.

### <Rubber Component>

The rubber component is not particularly limited and can be appropriately selected according to purpose. For example, it may be only a natural rubber (NR) or only a diene-based synthetic rubber or may be a combination of natural rubber and diene-based synthetic rubber. The diene-based synthetic rubber is not particularly limited and can be appropriately selected according to purpose. Examples thereof include a butadiene rubber (BR), a styrene-butadiene rubber (SBR), an isoprene rubber (IR), a chloroprene rubber (CR), an ethylene-propylene-diene rubber (EPDM), an acrylonitrile-butadiene rubber (NBR), and a butyl rubber (IIR). These examples of the diene-based synthetic rubber may be used alone or in a combination of two or more.

### <Fibrous or Flat Particle>

The rubber composition of the present embodiment contains fibrous or flat particles. Particles which are neither in a fibrous shape nor in a flat shape cannot exist as a relatively stable aggregate in the rubber composition or cannot sufficiently improve the surface roughness of a rubber member. Therefore, they cannot effectively improve the on-ice performance of a rubber article such as a tire.

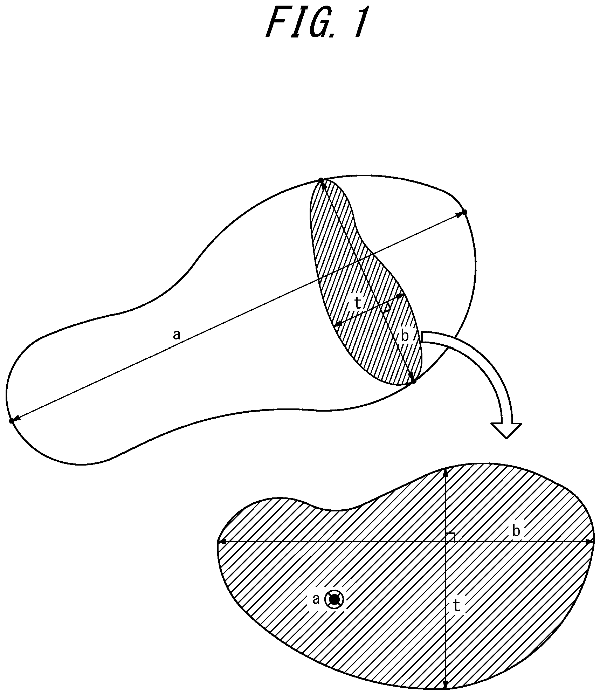

In the present specification, the "fibrous or flat shape" of the particle refers to a shape in which the value of a/t is 10 or more, where "a" is the linear distance in a direction (long-side direction) in which a linear distance between any two points on the outer surface of the particle is maximum; "b" is the length in a direction (short-side direction) in which a length of line segment between any two points is maximum in a plane in which a cross-sectional area obtained by cutting the particle in the direction perpendicular to the long-side direction is maximum; and "t" is the maximum value of the length of line segment between two points selected to be perpendicular to the short-side direction in the plane (see FIG. 1). For the fibrous or flat particles, "a" can be referred to as "long-side length", "t" as "thickness", and "b" as "short-side length".

In the present specification, the "fibrous shape" refers to a shape in which an aspect ratio of a/b (long-side length/short-side length) is 1.1 or more, and the "flat shape" refers to a shape in which the aspect ratio is less than 1.1. Examples of the "fibrous shape" includes a rod-like shape and a columnar shape, and examples of the "flat shape" includes a flat plate shape, a flaky shape, a layered shape, and a scaly shape.

The particles used in the rubber composition of the present embodiment preferably have a long-side length a of 20 µm or more and 50 mm or less, from the viewpoint of ease of forming aggregates having an aggregation diameter of 10 µm or more and 1000 µm or less.

For the particles used in the rubber composition of the present embodiment, the aspect ratio is preferably 1.1 or more. In other words, the particles used in the present embodiment are preferably in a fibrous shape. When the aspect ratio of the particles is 1.1 or more, the aggregates are more stable and less likely to be crushed, the surface roughness of a rubber member is effectively increased, the water absorption function is maintained for a long time, and the on-ice performance can be further improved. From the same viewpoint, the aspect ratio of the particles is more preferably 1.5 or more and still more preferably 1.75 or more.

The upper limit of the aspect ratio of the particles is not particularly limited. From the viewpoint of ease of procurement, for example, the aspect ratio of the particles is preferably 10000 or less.

The particles used in the rubber composition of the present embodiment may be made of an organic material or an inorganic material.

The inorganic material is not particularly limited and can be appropriately selected according to purpose. Examples of the inorganic material include diamond, silica, glass, gypsum, calcite, fluorite, orthoclase, aluminum hydroxide, alumina, silver, iron, titanium dioxide, cerium oxide, zinc oxide, carbon black, single-walled carbon nanotube, multi-walled carbon nanotube, and clay. These examples of the inorganic material may be used alone or in a combination of two or more.

The organic material is not particularly limited and can be appropriately selected according to purpose. Examples of the organic material include a cellulose-based resin (such as a rayon-based resin), a polyamide-based resin (such as a nylon-based resin or an aramid-based resin), an acrylic-based resin (such as polymethyl methacrylate), a polyester-based resin, a polyolefin-based resin, a polyvinyl alcohol-based resin, and a silica-based resin. These examples of the organic material may be used alone or in a combination of two or more.

Among the above-mentioned examples, the fibrous or flat particles used in the rubber composition of the present embodiment are more preferably made of one or more resins selected from the group consisting of a cellulose-based resin, a polyamide-based resin, a polyester-based resin, a polyolefin-based resin, a polyvinyl alcohol-based resin, and a silica-based resin, and still more preferably made of a cellulose-based resin, from the viewpoint of absorbing water and further improving the on-ice performance. Note that the cellulose-based resin also includes cellulose modified with optional components (modified cellulose).

In addition, the fibrous or flat particles used in the rubber composition of the present embodiment preferably have a melting point higher than 190 °C or be in a solid state at 190 °C, from the viewpoint of making it easier to prepare the rubber composition of the present embodiment,

The content of the fibrous or flat particles in the rubber composition of the present embodiment is not particularly limited, yet it is preferably 3 parts by mass or more and 100 parts by mass or less with respect to 100 parts by mass of the rubber component. When the content of the particles is 3 parts by mass or more with respect to 100 parts by mass of the rubber component, it is possible to obtain the effect of increasing the viscosity of the water film, the effect of improving the water absorption function of the aggregates, and thus the effect of improving the on-ice performance more reliably. In addition, when the content of the particles is 100 parts by mass or less with respect to 100 parts by mass of the rubber component, it is possible to prevent the aggregates from being excessively large and to sufficiently develop the various properties inherent in the rubber component such as the elastomeric property, the on-ice performance and the durability. From the same viewpoint, the content of the fibrous or flat particles in the rubber composition of an embodiment of the present disclosure is more preferably 10 parts by mass or more and 60 parts by mass or less with respect to 100 parts by mass of the rubber component.

### <Aggregate>

The fibrous or flat particles used in the present embodiment are aggregated to form aggregates in the rubber composition. In the present embodiment, the fibrous or flat particles may be curved or bent to form an aggregate.

In the rubber composition of the present embodiment, the proportion of aggregate having an aggregation diameter of 10 µm or more and 1000 µm or less among the plurality of aggregates formed of the fibrous or flat particles needs to be 70 % or more, preferably 80 % or more, and more preferably 90 % or more. When the proportion is less than 70 %, the on-ice performance of a rubber article cannot be efficiently improved because of the presence of too many excessively small aggregates or too many excessively large aggregates.

In the present specification, the "aggregation diameter" of the aggregate refers to the maximum value (diameter) of the length of line segment between any two points in an image obtained by binarizing a microscopic image of the aggregate. In the present specification, the "proportion of aggregate having an aggregation diameter of 10 µm or more and 1000 µm or less among the plurality of aggregates" can be obtained by preparing a histogram of the aggregation diameters of all the aggregates in an arbitrarily selected rectangular region of 10 mm × 8 mm and determining the proportion from the histogram.

As long as the rubber composition of the present embodiment contains a plurality of aggregates formed of fibrous or flat particles, it may also contain fibrous or flat particles that do not form an aggregate. However, from the viewpoint of obtaining the desired effects with a necessary minimum number of particles, the proportion of particles that do not form an aggregate (particles present as a single substance) among the fibrous or flat particles in the rubber composition of the present embodiment is preferably 10 % or less, more preferably 5 % or less, and still more preferably 2 % or less. The proportion refers to a proportion of an area occupied by the particles that do not form an aggregate out of the total area occupied by the fibrous or flat particles in a rectangular region of 10 mm × 8 mm that is arbitrarily selected from an image obtained by binarizing a microscopic image of the rubber composition.

In the rubber composition of the present embodiment, the aggregates formed of the fibrous or flat particles preferably have an average aggregation diameter of 10 µm or more and 1000 µm or less. When the average aggregation diameter of the aggregates is 10 µm or more, it is possible to sufficiently increase the surface roughness of a rubber member such as a tread portion of a tire and to sufficiently improve the on-ice performance of a rubber article such as a tire. In addition, when the average aggregation diameter of the aggregates is 1000 µm or less, the proportion of rubber component present on the outer surface of a rubber member such as a tread portion of a tire increases, and the various properties inherent in the rubber component such as the on-ice performance and the durability can be sufficiently developed.

As used herein, the "average aggregation diameter" of the aggregates refers to the median of the aggregation diameter obtained by preparing a histogram of the aggregation diameters for all the aggregates present in an arbitrarily selected rectangular region of 10 mm × 8 mm and determining the median of the aggregation diameter from the histogram.

The rubber composition of the present embodiment is not particularly limited and may contain particles in shapes other than the fibrous or flat shape.

### <Non-Particulate Thermoplastic Component>

The rubber composition of the present embodiment may further contain a non-particulate thermoplastic component. Suitable examples of the thermoplastic component include a thermoplastic resin. Examples of the thermoplastic resin include a polyolefin-based resin such as a polyethylene resin, a polypropylene-based resin and a polybutylene-based resin; a polybutadiene-based thermoplastic elastomer; and a vinyl-based resin such as a polyvinyl alcohol-based resin and a polyvinyl chloride-based resin. The thermoplastic component may be used alone or in a combination of two or more. In addition, the thermoplastic resin may be used alone or in a combination of two or more.

The above-mentioned thermoplastic component may be used in the method of producing a rubber composition of an embodiment of the present disclosure, which will be described later. In addition, the above-mentioned thermoplastic component may be uniformly mixed with the rubber component in the rubber composition or may form an island phase with the rubber component being a sea phase.

### (Production of Rubber Composition)

The rubber composition of the present embodiment can be produced with, for example, the method of producing a rubber composition of the present disclosure described later.

Alternatively, the rubber composition of the present embodiment can be produced by, for example, preparing a plurality of aggregates having a predetermined aggregation diameter in which fibrous or flat particles are extremely firmly entangled, mixing the aggregates with a rubber component, and kneading the mixture in a conventional manner.

### (Method of Producing Rubber Composition)

The method of producing a rubber composition of an embodiment of the present disclosure (hereinafter may be referred to as "production method of the present embodiment") is a method of producing the rubber composition described above, that is, a rubber composition containing a rubber component and fibrous or flat particles forming a plurality of aggregates whose size is optimized. Specifically, the method includes a process (mixing process) of mixing fibrous or flat particles and a thermoplastic component at a temperature that is equal to or higher than a melting point of the thermoplastic component and equal to or lower than a melting point of the particles to obtain a particle-containing mixture; a process (solidification and pulverization process) of solidifying and pulverizing the particle-containing mixture to obtain a plurality of preliminary aggregates formed of the particles and the thermoplastic component; and a process (aggregate formation process) of mixing the plurality of preliminary aggregates and a rubber component and heating the plurality of preliminary aggregates and the rubber component at a temperature that is equal to or higher than the melting point of the thermoplastic component and equal to or lower than the melting point of the particles to form a plurality of aggregates formed of the particles.

That is, in the production method of the present embodiment, fibrous or flat particles are used in combination with a predetermined thermoplastic component to form massive bodies with a desired size, that is, preliminary aggregates, before compounding the particles with a rubber component. The preliminary aggregates may have a structure in which the predetermined particles are entangled with each other and the surface is coated with a solidified thermoplastic component in this process. Therefore, the preliminary aggregates do not break easily even when mixed with a rubber component. In addition, even when the preliminary aggregates are mixed with a rubber component and then heated at a predetermined temperature, only the thermoplastic component melts. Therefore, it is possible to maintain the structure of the massive body in the rubber component. As a result, according to the production method of the present embodiment, it is possible to efficiently produce the rubber composition of the present embodiment, which contains a plurality of aggregates with an optimized size.

The production method of the present embodiment may include a process other than the above-mentioned processes. For example, it may include a process (classification process) of sifting the preliminary aggregates obtained by pulverization through a sieve and classifying the preliminary aggregates after the solidification and pulverization process and before the aggregate formation process.

### <Mixing Process>

The mixing process is an essential process in the production method of the present embodiment. It is a process of mixing fibrous or flat particles and a thermoplastic component at a temperature that is equal to or higher than a melting point of the thermoplastic component and equal to or lower than a melting point of the particles to obtain a particle-containing mixture.

The fibrous or flat particles are as described above.

Suitable examples of the thermoplastic component include a thermoplastic resin. Examples of the thermoplastic resin include a polyolefin-based resin such as a polyethylene resin, a polypropylene-based resin and a polybutylene-based resin; a polybutadiene-based thermoplastic elastomer; and a vinyl-based resin such as a polyvinyl alcohol-based resin and a polyvinyl chloride-based resin. The thermoplastic component may be used alone or in a combination of two or more. In addition, the thermoplastic resin may be used alone or in a combination of two or more.

The melting point of the thermoplastic component is preferably 180 °C or lower and preferably 170 °C or lower, from the viewpoint of making it easy to melt the thermoplastic component at the heating temperature in the aggregate formation process.

In addition, the temperature at which the fibrous or flat particles and the thermoplastic component are heated in the mixing process is preferably 10 °C higher than the melting point of the thermoplastic component or higher, from the viewpoint of ensuring melting of the thermoplastic component.

In the mixing process, the fibrous or flat particles and the melt of the thermoplastic component are compounded and mixed. The mixing method is not particularly limited, yet it is preferably a method with which the particles can be uniformly dispersed in the melt of the thermoplastic component. For example, the particles and the melt of the thermoplastic component are preferably mixed using a mixer that is usually used for rubber kneading. A particle-containing mixture can be obtained by the mixing. The particles mixed with the melt of the thermoplastic component have a fibrous or flat shape, so that they can entangle with themselves or with adjacent particles in the thermoplastic component.

The compounding amount of the fibrous or flat particles in the mixing process is preferably 10 parts by mass or more and 1000 parts by mass or less with respect to 100 parts by mass of the thermoplastic component. When the compounding amount of the particles is 10 parts by mass or more with respect to 100 parts by mass of the thermoplastic component, the particles can be sufficiently entangled in the thermoplastic component to form aggregates that can further increase the surface roughness of a rubber member in the rubber composition. In addition, when the compounding amount of the particles is 1000 parts by mass or less with respect to 100 parts by mass of the thermoplastic component, the entanglement of particles can be maintained in the solidification and pulverization process described later. From the same viewpoint, the compounding amount of the fibrous or flat particles is more preferably 30 parts by mass or more and 700 parts by mass or less with respect to 100 parts by mass of the thermoplastic component.

### <Solidification and Pulverization Process >

The solidification and pulverization process is an essential process in the production method of the present embodiment. It is a process of solidifying and pulverizing the particle-containing mixture obtained in the mixing process to obtain a plurality of preliminary aggregates formed of the particles and the thermoplastic component.

The method of solidifying the particle-containing mixture is not particularly limited, and examples thereof include allowing the mixture to cool down at room temperature. The method of pulverizing the solidified particle-containing mixture is not particularly limited, yet it is preferably a method with which the distribution of the aggregation diameter of the preliminary aggregates obtained by pulverization can be controlled. The preliminary aggregates obtained in the solidification and pulverization process may have a structure in which a plurality of particles having a fibrous or flat shape are entangled with each other and the surface is coated with the solidified thermoplastic component.

From the viewpoint of finally obtaining a desired rubber composition, the proportion of preliminary aggregate having an aggregation diameter of 10 µm or more and 1000 µm or less among the plurality of preliminary aggregates obtained in the solidification and pulverization process is preferably 70 % or more.

### <Classification Process>

The classification process is an optional process in the production method of the present embodiment. It is a process of sifting the pulverized preliminary aggregates obtained in the solidification and pulverization process through a sieve and classifying the preliminary aggregates. The classification process can be suitably carried out in the case, for example, where the preliminary aggregates obtained in the solidification and pulverization process include a large amount of excessively large aggregates and/or excessively small aggregates, or where the proportion of preliminary aggregate having an aggregation diameter of 10 µm or more and 1000 µm or less is small. In the classification process, it is possible to use a sieve to adjust the proportion of preliminary aggregate having an aggregation diameter of 10 µm or more and 1000 µm or less to 70 % or more.

### <Aggregate Formation Process>

The aggregate formation process is an essential process in the production method of the present embodiment. It is a process of mixing the plurality of preliminary aggregates obtained in the solidification and pulverization process or the classification process and a rubber component and heating the preliminary aggregates and the rubber component at a temperature that is equal to or higher than the melting point of the thermoplastic component contained in the preliminary aggregates and equal to or lower than the melting point of the particles to form a plurality of aggregates formed of the particles. By performing this process, the once solidified thermoplastic component is melted again. Finally, it is possible to obtain the rubber composition of the present embodiment that contains a plurality of aggregates with an optimized size. In the aggregate formation process, the mixing and the heating may be performed simultaneously, or the heating may be performed after the mixing. The mixing in the aggregate formation process can be performed using, for example, a Banbury mixer.

The rubber component is as described above

In the aggregate formation process, a filler such as carbon black or silica, a silane coupling agent, zinc oxide, stearic acid, process oil, a foaming agent, a vulcanizing agent (crosslinking agent) such as sulfur, a vulcanization accelerator (crosslinking accelerator), an age resistor, and other additives, which are not particularly limited and can be compounded with preliminary aggregates during the preparation of a conventional rubber composition for a rubber article such as a tire, can be compounded when compounding the preliminary aggregates with the rubber component.

The compounding amount of the preliminary aggregates is preferably 10 parts by mass or more and 120 parts by mass or less with respect to 100 parts by mass of the rubber component. When the compounding amount of the preliminary aggregates is 10 parts by mass or more with respect to 100 parts by mass of the rubber component, it is possible to ensure a sufficient amount of aggregates in the resulting rubber composition and to improve the on-ice performance of a rubber article more reliably. In addition, when the compounding amount of the preliminary aggregates is 120 parts by mass or less with respect to 100 parts by mass of the rubber component, it is possible to avoid too many aggregates in the resulting rubber composition, sufficiently develop the various properties inherent in the rubber component such as the elastomeric property, the on-ice performance and the durability, and to sufficiently suppress the deterioration of wear resistance in a rubber article. From the same viewpoint, the compounding amount of the preliminary aggregates is more preferably 20 parts by mass or more and 100 parts by mass or less with respect to 100 parts by mass of the rubber component.

In addition, the compounding of the preliminary aggregates is preferably performed by controlling the amount so that the content of the fibrous or flat particles in the finally obtained rubber composition is 3 parts by mass or more and 100 parts by mass or less with respect to 100 parts by mass of the rubber component.

### (Tire)

The tire of an embodiment of the present disclosure includes the above-described rubber composition in a tread portion. Since the tire uses the above-described rubber composition at least in the tread portion, the on-ice performance is improved, and the deterioration of wear resistance is advantageously suppressed. Therefore, the tire of the present disclosure is preferably used as a studless tire, particularly as a studless tire for passenger vehicles. The tire of the present disclosure is not particularly limited except that the above-described rubber composition is used in a tread portion. The tire of the present disclosure can be produced with a conventional method.

### EXAMPLES

The following describes the present disclosure in more detail based on Examples. However, the present disclosure is not limited to the following Examples and may be appropriately changed without departing from the scope thereof.

### (Example 1)

### <Preparation of Preliminary Aggregate>

A polyethylene resin ("UBE polyethylene F120N" made by Ube-Maruzen Polyethylene Co, Ltd.) was used as the thermoplastic component, and 20 g of the polyethylene resin was masticated at 140 °C using a mixer used for rubber kneading ("50MR" made by Toyo Seiki Seisaku-sho, Ltd.). After confirming that the polyethylene resin had melted, 20 g of fibrous particles ("KC FLOCK Y-400" made by Nippon Paper Industries Co., Ltd. and indicated as "cellulose A" in Table 2), which were made of cellulose and prepared as the fibrous or flat particles, were fed into the mixer to obtain a particle-containing mixture.

Subsequently, the particle-containing mixture was taken out from the mixer, cooled to room temperature, and solidified. The solidified particle-containing mixture was then pulverized as uniformly as possible using a mortar and pestle to obtain preliminary aggregates. The obtained preliminary aggregates had an aggregation diameter of 10 µm or more and 1000 µm or less.

### <Preparation of Rubber Composition>

Next, the preliminary aggregates, a rubber component, and other additives were mixed according to the composition listed in Table 1 (see Table 2 for the compounding amount of the preliminary aggregate of Table 1) and kneaded for a predetermined time, to prepare a rubber composition. The wear resistance of the rubber composition was measured and evaluated with the following method using a sample of the rubber composition.

### <Wear Resistance>

The sample of the rubber composition was vulcanized at 160 °C for 15 minutes to obtain a vulcanized rubber. A disc-like test piece (diameter: 16.2 mm, thickness: 6 mm) was cut out from the obtained vulcanized rubber, and then the wear loss at a slip rate of 60 % at room temperature was measured using a Lambourn abrasion testing machine according to JIS-K6264-2:2005. The result was the reciprocal of the measured value of the wear loss, and the result was indicated in an index taking the reciprocal value of the wear loss of Comparative Example 1 as 100. A large index indicates small wear loss, meaning that it is excellent in wear resistance. The result is listed in Table 2.

### <Production of Tire>

The prepared rubber composition was used to prepare a (unvulcanized) tread portion of a tire, and it was placed at a right position to obtain a raw tire. The raw tire was mold vulcanized at 165 °C for 10 minutes to produce a 185/70R13 radial tire for passenger vehicles. The maximum temperature during the vulcanization of the rubber composition was 165°C.

**Table 1**

| | | Compounding |
|---|---|---|
| Natural rubber | Parts by mass | 30 |
| Butadiene rubber *1 | | 70 |
| Preliminary aggregate | | Variables (see Table 2) |
| Carbon black *2 | | 20 |
| Silica *3 | | 35 |
| Process oil | | 10 |
| Stearic acid | | 2 |
| Zinc oxide | | 3.5 |
| Age resistor *4 | | 1 |
| Vulcanization accelerator A *5 | | 0.8 |
| Vulcanization accelerator B *6 | | 1 |
| Sulfur | | 1 |

| | | |
|---|---|---|
| *1 Butadiene rubber: "BR01", cis-1,4-polybutadiene, made by JSR Corporation *2 Carbon black: "Carbon N220" made by Asahi Carbon Co., Ltd. *3 Silica: Nipsil-VN3, made by Nippon Silica Industrial Co., Ltd. *4 Age resistor: "NOCRAC 6C", made by Ouchi Shinko Chemical Industrial Co., Ltd. *5 Vulcanization accelerator A: dibenzothiazyl disulfide *6 Vulcanization accelerator B: N-cyclohexyl-2-benzothiazolyl sulfenamide | | |

The proportion of aggregate having an aggregation diameter of 10 µm or more and 1000 µm or less (hereinafter may be referred to as "aggregate having a desired diameter") and the proportion of particles that do not form an aggregate in the tread portion of the obtain tire, and the on-ice performance of the tire were measured and evaluated with the following methods.

### <Proportion of Aggregate Having Desired Diameter>

A rubber sample including the surface to be grounded was cut out from the tread center portion of the obtained tire, a rectangular region of 10 mm × 8 mm was arbitrarily selected from the surface of the sample, and the rectangular region was observed under a microscope. Subsequently, the observation image of the region was subjected to a binarize process. Then, the aggregation diameters (the maximum value of the length of line segment between any two points) of all the aggregates observed in the binarized image were measured, and a histogram of the aggregation diameters was prepared. The proportion of aggregate having a desired diameter was determined from the histogram. The result is listed in Table 2.

### <Proportion of Particle Not Forming Aggregate>

The proportion of an area occupied by the particles that do not form an aggregate out of the total area occupied by the particles was obtained from the binarized image of the rectangular region of 10 mm × 8 mm. The result is listed in Table 2.

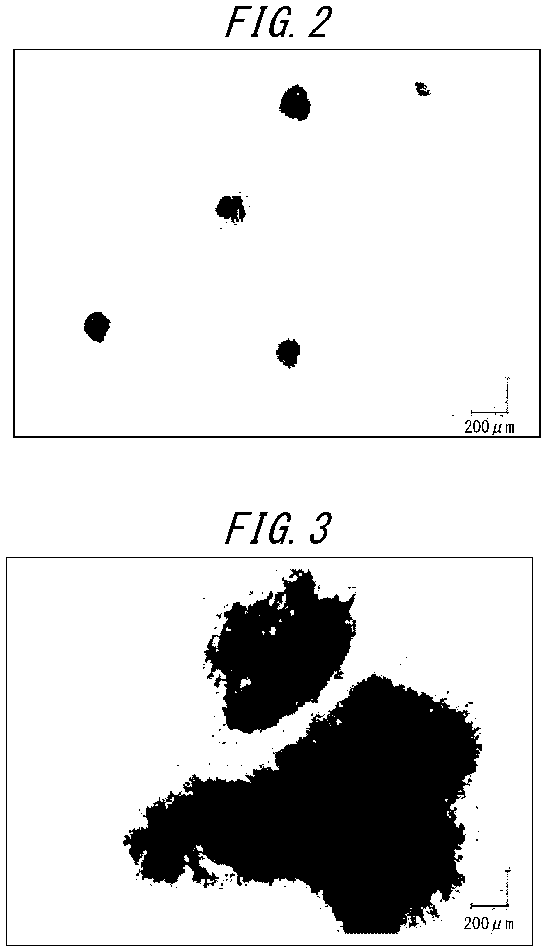

For reference, FIG. 2 schematically illustrates the binarized image of the rubber composition of Example 1, and FIG. 3 schematically illustrates the binarized image of the rubber composition of Comparative Example 4. It is possible to confirm several aggregates having an aggregation diameter of 100 µm to 200 µm from FIG. 2, and to confirm aggregates having an aggregation diameter of 1000 µm to 1500 µm from FIG. 3.

### <On-Ice Performance of Tire>

A passenger vehicle equipped with the obtained tire was driven on an asphalt road for 200 km and then on a flat icy road and braked at a speed of 20 km/h to lock the tire. The braking distance until the vehicle completely stopped was measured. The result is indicated in an index taking the reciprocal of the braking distance of the tire of Comparative Example 1, which will be described later, as 100. A large index indicates excellent on-ice performance. The result is listed in Table 2.

### (Examples 2 to 9)

The preparation of preliminary aggregate, preparation of rubber composition and production of tire of Examples 2 to 9 were performed in the same manner as in Example 1 except that the type of the thermoplastic component, the type of the particles, the compounding amount of the particles with respect to the thermoplastic component, and/or the compounding amount of the preliminary aggregates with respect to the rubber component were changed as indicated in Table 2, and that the pulverization conditions of the solidified particle-containing mixture were appropriately changed so that the aggregation diameter of the preliminary aggregates was in the range indicated in Table 2. Measurement and evaluation were performed in the same manner as in Example 1. The results are listed in Table 2.

### (Examples 10 and 11)

The preparation of rubber composition and production of tire of Examples 10 and 11 were performed in the same manner as in Example 1 except that the cellulose A used in Example 1 was pulverized so as to have the respective aspect ratio listed in Table 2, and that the pulverization conditions of the solidified particle-containing mixture were appropriately changed so that the aggregation diameter of the preliminary aggregates was substantially the same as that in Example 1. Measurement and evaluation were performed in the same manner as in Example 1. The results are listed in Table 2.

### (Comparative Example 1)

The preparation of rubber composition and production of tire of Comparative Example 1 were performed in the same manner as in Example 1 except that no preliminary aggregate was prepared and that no preliminary aggregate (or particle) was used in the preparation of rubber composition, as indicated in Table 2. Measurement and evaluation were performed in the same manner as in Example 1. The results are listed in Table 2.

### (Comparative Examples 2, 3, and 7)

The preparation of rubber composition and production of tire of Comparative Examples 2, 3, and 7 were performed in the same manner as in Example 1 except that no preliminary aggregate was prepared and that the particles indicated in Table 2 were mixed with the rubber component in the amount indicated in Table 2 instead of the preliminary aggregates, as indicated in Table 2. Measurement and evaluation were performed in the same manner as in Example 1. The results are listed in Table 2.

### (Comparative Examples 4 and 5)

The preparation of rubber composition and production of tire of Comparative Examples 4 and 5 were performed in the same manner as in Example 1 except that the pulverization conditions of the solidified particle-containing mixture were changed so that the proportion of aggregate having an aggregate diameter of 10 µm or more and 1000 µm or less among the plurality of aggregates in the obtained rubber composition was in the range indicated in Table 2. Measurement and evaluation were performed in the same manner as in Example 1. The results are listed in Table 2.

### (Comparative Example 6)

The preparation of rubber composition and production of tire of Comparative Example 6 were performed in the same manner as in Comparative Example 7 except that the kneading time during the preparation of rubber composition was longer so that the particles were dispersed as a single substance in the rubber composition. Measurement and evaluation were performed in the same manner as in Example 1. The results are listed in Table 2.

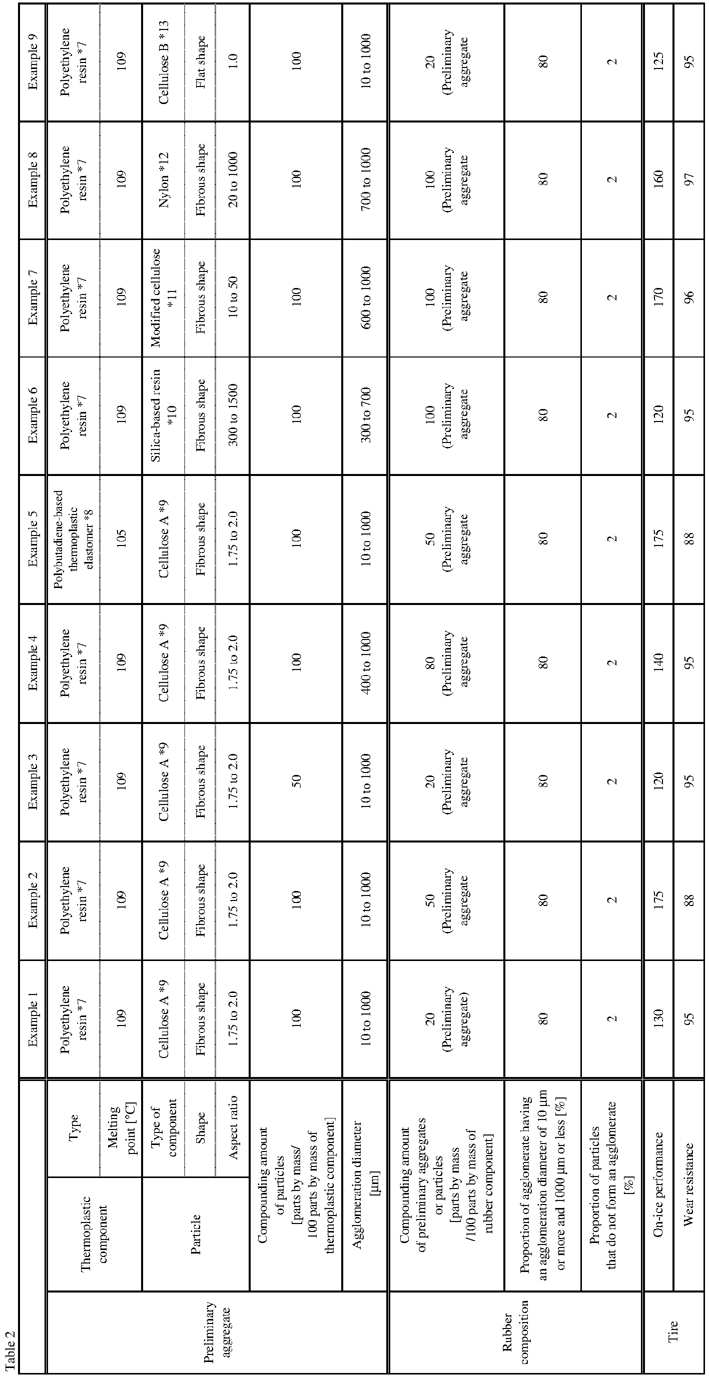

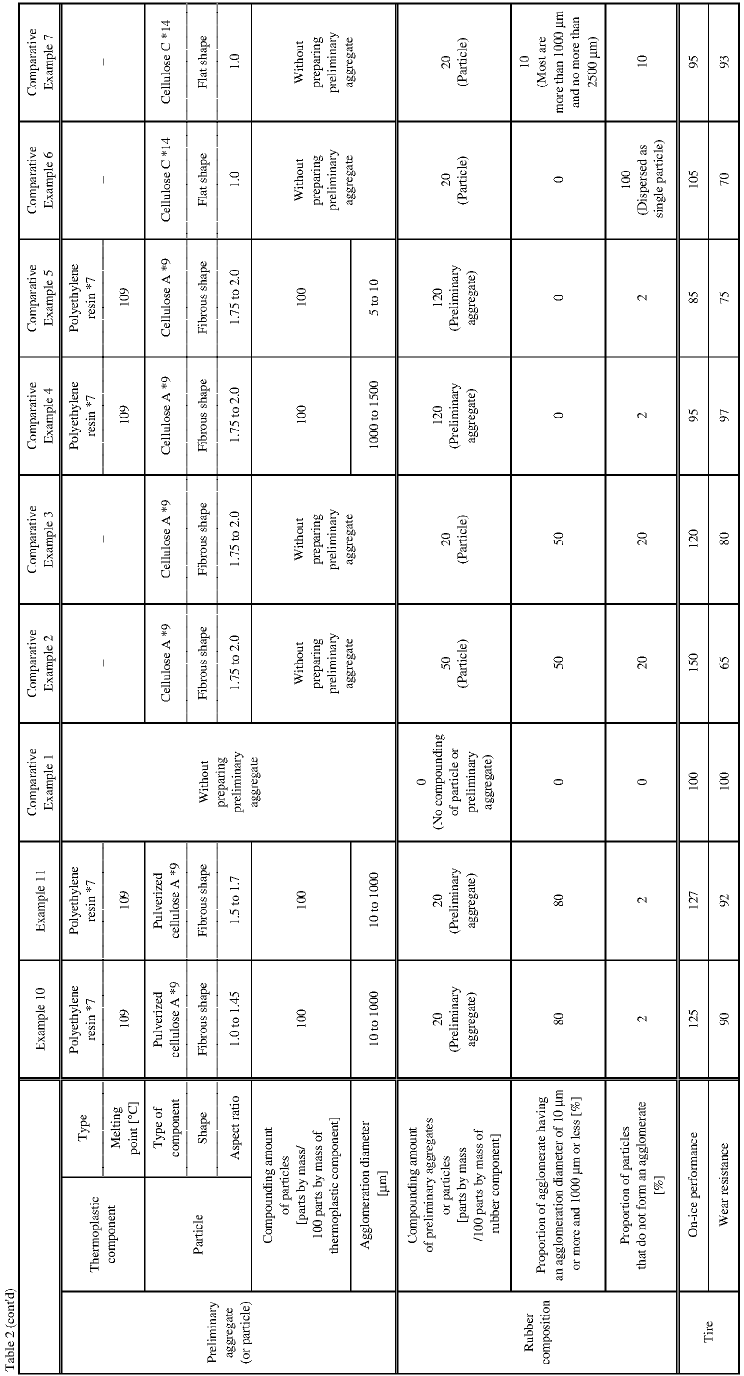

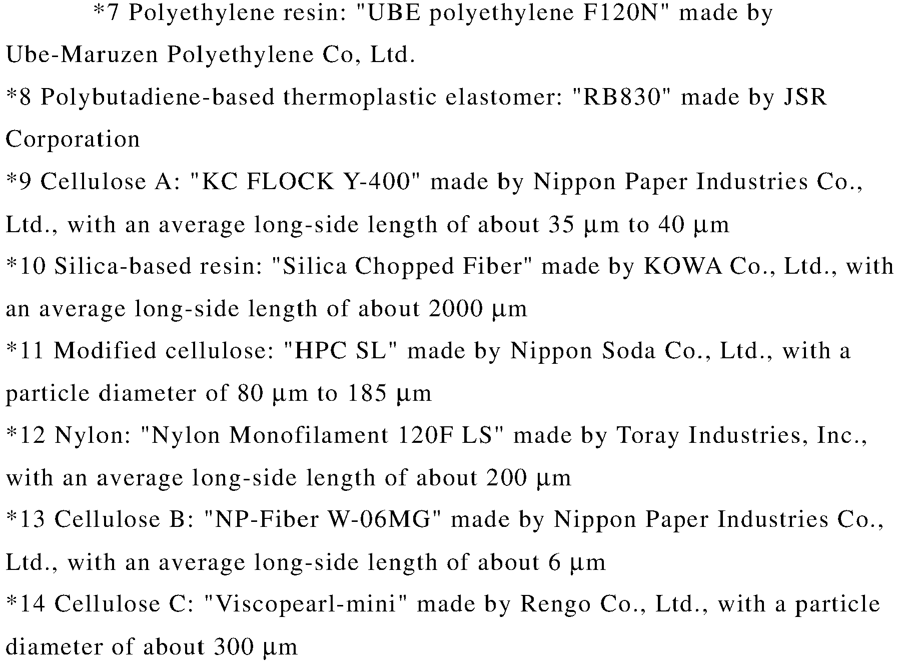

It can be understood from Table 2 that, for the rubber compositions of Examples where a plurality of aggregates formed of fibrous or flat particles are contained in the rubber composition and the proportion of aggregate having an aggregation diameter of 10 µm or more and 1000 µm or less is 70 % or more among the plurality of aggregates, when they are used in the tread portion of a tire which is a rubber article, for example, they can improve the on-ice performance of the tire while maintaining the wear resistance of the tire at a good level. Further, in Examples, preliminary aggregates having a desired diameter are formed by the fibrous or flat particles prior to the compounding with the rubber component, and the preliminary aggregates are used to form aggregates having a desired diameter in the rubber composition. It can be understood that Examples can produce the rubber composition efficiently.

In Comparative Examples 2, 3, and 7, the particles were used without preparing the preliminary aggregates. As a result, the amount of formed aggregates was small, and the aggregates having an aggregation diameter of 10 µm or more and 1000 µm or less was insufficient. Therefore, in Comparative Examples 2, 3, and 7, at least one of the on-ice performance and the wear resistance was deteriorated. Particularly, Comparative Example 7 used particles having a relatively large particle diameter (about 300 µm). As a result, most of the aggregates had an aggregation diameter of more than 1000 µm, and it was difficult to control the aggregation diameter.

Further, in Comparative Example 6, the kneading time during the preparation of rubber composition was longer than that in Comparative Example 7. As a result, particles having a particle diameter of about 300 µm were dispersed as a single substance in the rubber composition. However, Comparative Example 6 did not obtain good results. It can be understood from these results that the presence of the aggregates having an aggregation diameter of 10 µm or more and 1000 µm or less in the rubber composition, rather than the presence of the single particles having the equivalent diameter, is important for exhibiting the desired effects.

### INDUSTRIAL APPLICABILITY

According to the present disclosure, it is possible to provide a rubber composition that can improve the on-ice performance of a rubber article such as a tire while maintaining the wear resistance of the rubber article at a good level. In addition, according to the present disclosure, it is possible to provide a method of producing a rubber composition capable of efficiently producing a rubber composition that can improve the on-ice performance of a rubber article such as a tire while maintaining the wear resistance of the rubber article at a good level. Further, according to the present disclosure, it is possible to provide a tire with improved on-ice performance and good wear resistance.

## Claims

1. A rubber composition comprising a rubber component and fibrous or flat particles, wherein
the particles form a plurality of aggregates in the rubber composition, and
a proportion of aggregate having an aggregation diameter of 10 µm or more and 1000 µm or less is 70 % or more among the plurality of aggregates.

2. The rubber composition according to claim 1, wherein the particles have an aspect ratio of 1.1 or more.

3. The rubber composition according to claim 1 or 2, wherein the particles are made of at least one resin selected from the group consisting of a cellulose-based resin, a polyamide-based resin, a polyester-based resin, a polyolefin-based resin, a polyvinyl alcohol-based resin, and a silica-based resin.

4. The rubber composition according to any one of claims 1 to 3, further comprising a non-particulate thermoplastic component.

5. A method of producing the rubber composition according to any one of claims 1 to 4, comprising
a process of mixing fibrous or flat particles and a thermoplastic component at a temperature that is equal to or higher than a melting point of the thermoplastic component and equal to or lower than a melting point of the particles to obtain a particle-containing mixture;
a process of solidifying and pulverizing the particle-containing mixture to obtain a plurality of preliminary aggregates formed of the particles and the thermoplastic component; and
a process of mixing the plurality of preliminary aggregates and a rubber component and heating the plurality of preliminary aggregates and the rubber component at a temperature that is equal to or higher than the melting point of the thermoplastic component and equal to or lower than the melting point of the particles to form a plurality of aggregates formed of the particles.

6. A tire comprising the rubber composition according to any one of claims 1 to 4 in a tread portion.
